# EUROPÄISCHE PATENTSCHRIFT

(11) **EP 3 320 764 B1**
(45) Veröffentlichungstag und Bekanntmachung des Hinweises auf die Patenterteilung: **01.01.2020**
(21) Anmeldenummer: 16198220.2
(22) Anmeldetag: 10.11.2016
(51) Int. Cl.: A01C 7/20, A01C 5/06

(54) **SÄREIHE FÜR EINE SÄMASCHINE**
SOWING ROW FOR A SEED DRILL
LIGNE DE SEMIS POUR SEMOIR

(43) Veröffentlichungstag der Anmeldung: 16.05.2018
(73) Patentinhaber: Kverneland AS, 4353 Klepp St. (NO)
(72) Erfinder: Schumacher, Ferdinand, 59510 Lippetal-Oestinghausen (DE)
(74) Vertreter: Bittner, Thomas L.

(56) Entgegenhaltungen:
- EP-A1- 2 823 700
- WO-A1-2017/027372
- US-A1- 2003 183 141
- US-A1- 2010 300 342
- US-A1- 2012 240 837
- US-A1- 2015 351 313

## Beschreibung

Die Erfindung betrifft eine Säreihe für eine Sämaschine.

### Hintergrund

Bei Sämaschinen werden mehrere derartige Säreihen quer zur Fahr-, Zug- oder Arbeitsrichtung an einem Tragbalken montiert, um eine Aneinanderreihung von Säreihen herzustellen, sodass im Betrieb ein Arbeitsgut, insbesondere ein Saatgut in mehreren in Querrichtung nebeneinander liegende Furchen ausgebracht werden kann. Die Säreihe verfügt über mehrere Funktionskomponenten oder -einheiten, die im Betrieb der Sämaschine jeweils ein oder mehrere Teilfunktionen übernehmen. Zu den Funktionskomponenten gehört beispielsweise ein sogenanntes Säherz, bei dem es sich um eine Dosiereinrichtung handelt, mit der das auszubringende Arbeitsgut dosiert wird, insbesondere Saatgut. Beispiele für Säherzen sowie hiermit verbundener Funktionskomponenten finden sich in den folgenden Dokumenten DE 196 13 785 C2, DE 10 2008 056 526 B3 sowie DE 10 2008 056 534 A1.

Eine Bauteilanordnung, die auch als Säscharreinheit bezeichnet wird, ist in dem Dokument DE 10 2010 016 342 A1 offenbart.

Weitere Säreihen sind in den Dokumenten EP 2823700 A1, US 2012/240837 A1, US 2010/300342 A1, US 2003/0183141 A1 sowie US 2015/0351313 A1 offenbart.

Im Dokument WO 2017 / 027372 A1 ist eine Säreihe mit einer Trageinrichtung offenbart, welche einstückig miteinander verbundene Tragarme aufweist, mit denen ein proximaler und hiervon abstehender distaler Tragarm gebildet sind. Ein Säherz ist mit seiner Stirnseite auf den distalen Tragarm oben aufgesetzt.

Bei bekannten Säreihen sind eine Kopplungseinrichtung, die dazu dient, die Säreihe an der Sämaschine zu montieren, insbesondere an einem quer zur Arbeitsrichtung verlaufenden Tragbalken, sowie eine Trageinrichtung über ein Gelenk verbunden, bei dem es sich um ein Parallellogrammgelenk handeln kann. Das Gelenk ermöglicht ein Verschwenken der Trageinrichtung um den Tragbalken im Betrieb. Bekannte Trageinrichtungen weisen einen komplexen Aufbau auf, mit dem Ziel, die verschiedenen an der Trageinrichtung angeordneten Funktionskomponenten in ihrer Betriebsfunktion zu unterstützen.

### Zusammenfassung

Aufgabe der Erfindung ist es, eine Säreihe für eine Sämaschine mit verbesserter Konstruktion anzugeben, die insbesondere eine effiziente Montage und Wartung unterstützt.

Gelöst wird die Aufgabe durch eine Säreihe für eine Sämaschine nach dem unabhängigen Anspruch 1. Alternative Ausgestaltungen sind Gegenstand von abhängigen Unteransprüchen.

Nach einem Aspekt ist eine Säreihe für eine Sämaschine geschaffen, die eine Kopplungseinrichtung und eine Gelenkeinrichtung aufweist. Die Kopplungseinrichtung ist eingerichtet, an ein Tragelement einer Sämaschine zu koppeln, beispielsweise einen Tragbalken. Mittels der Gelenkeinrichtung ist zwischen der Kopplungseinrichtung und einer Trageinrichtung ein Gelenk bereitgestellt, beispielsweise in Form eines Parallelogrammgelenks. An der Trageinrichtung sind getrennt Befestigungspunkte für an der Trageinrichtung angeordnete Funktionskomponenten oder -bauteile gebildet. Es ist ein Säherz vorgesehen, welches eingerichtet ist, ein auszubringendes Arbeitsgut zu dosieren, beispielsweise für das Ausbringen einzelner Körner. Die Trageinrichtung weist einen proximalen Tragarm, welcher an die Gelenkeinrichtung koppelt, und einen distalen Tragarm auf. Der distale Tragarm erstreckt sich auf einer von der Gelenkeinrichtung abgewandten Seite des proximalen Tragarms von diesem weg und ist an dem proximalen Tragarm einstückig angeformt. An dem distalen Tragarm ist das Säherz im Bereich eines Montageabschnitts angeordnet.

Der proximale Tragarm und der distale Tragarm können zusammen einer T-Form entsprechend angeordnet sein. In einer Ausgestaltung erstreckt sich der proximale Tragarm zumindest in einer Ausgangsstellung in Vertikalrichtung, wohingegen der distale Tragarm in diesem Fall sich im Wesentlichen horizontal erstreckt.

Die vorgesehene Bauweise der Trageinrichtung und das Montieren des Säherzens am einstückig angeformten distalen Tragarm unterstützen eine effiziente Montage und gegebenenfalls Demontage der Säreihe, insbesondere betreffend die Anordnung des Säherzens an der Trageinrichtung. Es ist ein vereinfachter Aufbau bereitgestellt, der darüber hinaus die Wartung und die Reparatur am Säherz erleichtern kann.

Die Funktionskomponenten des Säherzens können für verschiedene Arbeitsgüter eingerichtet sein, insbesondere ein Saatgut, Dünger und / oder andere granulatartige Materialien. Das Säherz kann eingerichtet sein für das Säen von Einzelkörnern, insbesondere eine EinzelkornSämaschine.

Die Trageinrichtung, welche den proximalen und den distalen Tragarm aufweist, kann als ein einzelnes mittels der Gelenkeinrichtung angelenktes Monoschwenkbauteil ausgeführt sein. In einer Ausführung kann ein Monoschwenkarm bereitgestellt sein, der die Trageinrichtung bildet. Das Monoschwenkbauteil ist über die Gelenkeinrichtung angelenkt.

Das Säherz kann mit Blick in Arbeitsrichtung in Bezug auf den proximalen Tragarm und die Gelenkeinrichtung im Wesentlichen mittig angeordnet sein. Die Arbeitsrichtung kann auch als Zug- oder Fahrrichtung bezeichnet werden, entlang welcher die Sämaschine mit den hieran angeordneten Säreihen im Betrieb bewegt wird. Wird die Säreihe entlang dieser Richtung betrachtet, so ist das Säherz im Wesentlichen mittig oder zentriert angeordnet.

Das Säherz kann zumindest auf einer Säherzseite, die sich in Längsrichtung des distalen Tragarms erstreckt, im Wesentlichen freiliegend angeordnet sein. Zumindest auf einer Säherzseite, also mit Blick Richtung quer zur Arbeitsrichtung, kann das Säherz an der Trageinrichtung freiliegend angeordnet sein, insbesondere unverbaut durch Teile der Trageinrichtung, wahlweise auch nicht verbaut durch Bauteile, die an der Trageinrichtung montiert sind. In einer Ausgestaltung kann vorgesehen sein, dass sich der Montageabschnitt des distalen Tragarms entlang einer Rückseite des Säherzens erstreckt, wohingegen die gegenüberliegende Vorderseite des Säherzens, wieder in Blickrichtung quer zur Arbeitsrichtung, demgegenüber unverbaut ist, also freiliegend. Bei dieser oder anderen Ausführungsformen kann das Säherz an dem distalen Tragarm in einem oder mehreren Befestigungspunkten montiert sein, die ausschließlich der Säherzmontage zugeordnet sind.

Der Montageabschnitt kann im Bereich einer seitlichen Ausbuchtung des distalen Tragarms gebildet sein. Im Bereich der seitlichen Ausbuchtung kann der Verlauf des distalen Tragarms gerade oder gekrümmt sein, zum Beispiel nach außen gekrümmt, beispielweise in Form eines Bogens. Die seitliche Ausbuchtung kann mithilfe eines Parallelversatzes des zugehörigen Abschnitts des distalen Tragarms ausgebildet sein, insbesondere im Fall eines geraden seitlich versetzten Abschnitts. Sich endseitig an die seitliche Ausbuchtung anschließende Abschnitte des distalen Tragarms können eine Begrenzung oder einen Anschlag für das im diesem Bereich montierte Säherz bilden.

Der Montageabschnitt kann im Bereich eines sich vertikal flächig erstreckenden Tragarmabschnitts des distalen Tragarms gebildet sein. Ein Tragarmabschnitt, der sich vertikal flächig und dem Seitenwandabschnitt des Säherzens gegenüberliegend erstreckt, kann hierauf flächig aufliegen. Über die vertikal flächige Erstreckung des Tragarmabschnitts können flächig verteilt mehrere Befestigungspunkte für die Montage des Säherzens vorgesehen sein.

Bei der Trageinrichtung können zumindest der proximale Tragarm und der hieran einstückig angeformte distale Tragarm an einem Gussbauteil gebildet sein. Das Gussbauteil, bei dem es sich um ein Metallgussbauteil handeln kann, kann aus dem proximalen und dem distalen Tragarm bestehen. Beispielsweise kann das Monoschwenkbauteil als einstückiges Gussbauteil aus Metall ausgeführt sein.

Bei der Säreihe kann wenigstens eine der folgenden Einrichtungen vorgesehen sein: eine Furchenschneideinrichtung, die an der Trageinrichtung angeordnet und eingerichtet ist, im Betrieb eine Bodenfurche zum Aufnehmen eines auszubringenden Arbeitsguts zu erzeugen; einer Andruckeinrichtung, die an der Trageinrichtung angeordnet und eingerichtet ist, das im Betrieb ausgebrachte Arbeitsgut in der Bodenfurche anzudrücken; eine Ausbringeinrichtung, die an der Trageinrichtung angeordnet und eingerichtet ist, im Betrieb das dosierte Arbeitsgut vom Säherz zu empfangen und in die Bodenfurche und / oder benachbart hierzu auszubringen; und ein Tank für das auszubringende Arbeitsgut. Das Säherz kann eingerichtet sein, das Arbeitsgut vom Tank zu empfangen und dieses dann zu dosieren.

Wenigstens zwei oder alle der folgenden Funktionskomponenten können an voneinander getrennten Befestigungspunkten an der Trageinrichtung aufgenommen sein: das Säherz, die Furchenschneideinrichtung, die Andruckeinrichtung, die Ausbringeinrichtung, der Tank und eine Aufnahmeeinrichtung für den Tank. Einige oder alle der Funktionskomponenten sind bei dieser Ausgestaltung über jeweils individuell zugeordnete Befestigungspunkte, die für die verschiedenen Funktionskomponenten getrennt voneinander gebildet sind, an der Trageinrichtung montiert. Pro Funktionskomponente können ein oder mehrere Befestigungspunkte vorgesehen sein. Die Befestigung in den Befestigungspunkten kann beispielsweise mittels Schraubverbindung erfolgen. Bei dieser oder anderen Ausgestaltungen kann die Aufnahmeeinrichtung für den Tank an einem oberen Ende des proximalen Tragarms angeformt sein, sei es als ein- oder mehrstückige Aufnahmeeinrichtung. Die Aufnahmeeinrichtung kann mit einer Halteeinrichtung für den Tank gebildet sein, an welcher der Tank gehalten ist, sei es lösbar oder nicht lösbar. Die Aufnahmeeinrichtug kann einen Haltebügel für den Tank aufweisen. Die Aufnahmeeinrichtung für den Tank kann sich am oberen Endanschnitt des proximalen Tragarms in eine Richtung von dem Gelenk wegerstrecken, beispielsweise bis in einen Bereich oberhalb der Furchenschneideinrichtung.

Es kann vorgesehen sein, dass die Furchenschneideinrichtung an dem proximalen Tragarm und die Andruckeinrichtung an dem distalen Tragarm angeordnet sind. Bei dieser oder anderen Ausführungsformen kann die Furchenschneideinrichtung mit einer oder mehreren Schneidscheiben gebildet sein. Im Fall von mehreren Schneidscheiben können zwei Schneidscheiben in einer V-Anordnung angeordnet sein. Der Furchenschneideinrichtung kann in den verschiedenen Bauformen in Arbeits- oder Zugrichtung eine Abdeckung vorgelagert sein, die beispielsweise an dem proximalen Tragarm befestigt ist. Die Andruckeinrichtung kann bei dieser oder alternativen Ausführungen mithilfe eines Schwenkarms an dem distalen Tragarm angeordnet sein. Die Andruckeinrichtung dient dazu, das ausgebrachte Arbeitsgut, zum Beispiel das Saatgut, im Boden anzudrücken, insbesondere innerhalb der Bodenfurche und / oder benachbart hierzu. Die Andruckeinrichtung kann ein oder mehrere Räder aufweisen, beispielsweise Gummiräder. Für wenigstens zwei der Räder kann eine V-Anordnung vorgesehen sein. Die Andruckeinrichtung kann einstellbar sein, derart, dass mittels einer Einstellvorrichtung der ausgeübte Druck beim Andrücken verstellbar ist. In diesem Zusammenhang kann ein Federmechanismus zum Bereitstellen einer Federvorspannkraft vorgesehen sein.

Das Säherz kann in einem Bauraum aufgenommen sein, der oberhalb der Furchenschneideinrichtung und unterhalb des Tanks angeordnet ist. Der Bauraum kann zumindest auf einer Säherzseite im Wesentlichen vollständig unverbaut sein, sodass das Säherz zu dieser Seite hin abgenommen werden kann, beispielsweise bei einer Demontage oder zu Wartungszecken. Aber auch ohne Abnehmen des Säherzens erlaubt diese Bauweise eine verbesserte Zugänglichkeit des Säherzens.

Der distale Tragarm kann einen endseitigen zum Boden hin abgewinkelten Tragarmabschnitt aufweisen. Der endseitige zum Boden hin abwinkelte Tragarmabschnitt kann einstückig an dem distalen Tragarm angeformt sein, beispielsweise bei der Ausgestaltung als Gussbauteil.

Die Andruckeinrichtung kann an einem Befestigungspunkt an dem abgewinkelten Tragarmabschnitt angeordnet sein. Die Andruckeinrichtung kann mittels eines Schwenkarms an dem abgewinkelten Tragarmabschnitt montiert sein. An dem Schwenkarm können ein oder mehrere Befestigungspunkte für Andruckrollen oder -räder vorgesehen sein, die in Arbeitsrichtung auch hintereinander liegend angeordnet sein können. Für die verschiedenen Andruckrollen oder -räder kann jeweils eine Einstellvorrichtung zum Einstellen der Andruckkraft vorgesehen sein.

An dem abgewinkelten Tragarmabschnitt kann eine mit der Furchenschneideinrichtung zusammenwirkende Sätiefenverstell- oder Sätiefeneinstelleinrichtung angeordnet sein. Die Verstelleinrichtung, die auch als Saattiefenverstell- oder Saattiefeneinstelleinrichtung bezeichnet werden kann, kann mit zwei Rädern gebildet sein, beispielsweise zwei Gummiräder, die auf gegenüberliegenden Seiten der Furchenschneideinrichtung angeordnet sind. Mittels Verstellen der Relativlage der Räder zur Furchenschneideinrichtung, insbesondere in der Höhe über dem Boden, kann die Sätiefe eingestellt werden. Das oder die Räder können an einem Lenkerbauteil gelagert sein, welches seinerseits am distalen Tragarm befestigt ist, zum Beispiel im Bereich des abgewinkelten Tragarmabschnitts. Das Lenkerbauteil kann sich auf beiden Seiten von dem distalen Tragarm weg in Arbeitsrichtung erstreckende Arme aufweisen, an deren Enden die Räder lagern.

An dem proximalen Tragarm kann eine den Tank tragende Halteeinrichtung angeordnet sein, die sich bis in einen Bereich oberhalb des Säherzens erstreckt.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine perspektivische Darstellung einer Säreihe für eine Sämaschine;
- Fig. 2: eine perspektivische Darstellung von Teilkomponenten der Säreihe auf Fig. 1; und
- Fig. 3: eine perspektivische Darstellung einer einstückig ausgeführten Trageinrichtung.

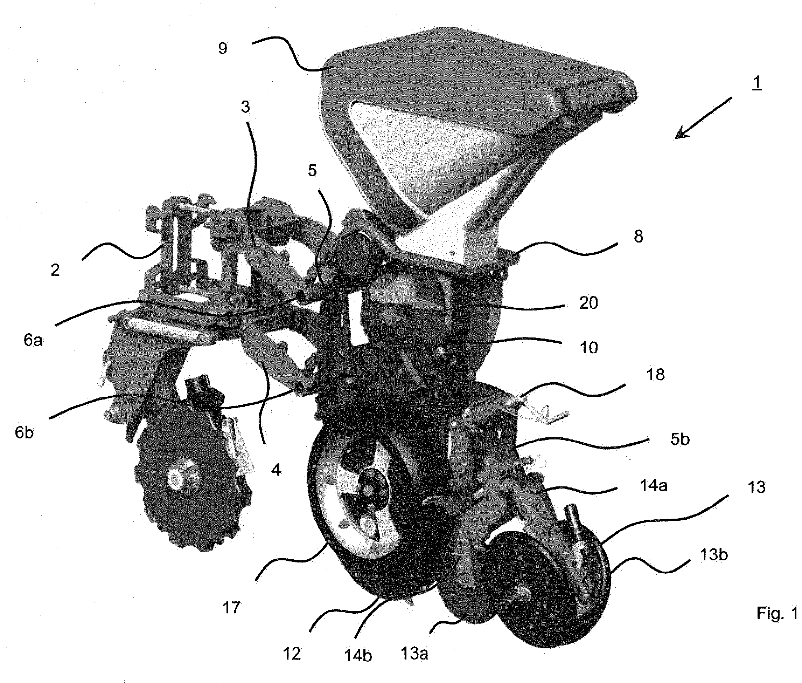

Fig. 1 zeigt eine perspektivische Darstellung einer Säreihe 1 für eine Sämaschine. Die Säreihe 1 weist eine Kopplungs- oder Befestigungseinrichtung 2 auf, mit der die Säreihe 1 an einem Bauteil einer Sämaschine (nicht dargestellt) montierbar oder befestigbar ist, beispielsweise einem Tragbalken, der sich quer zur Längsrichtung der Säreihe 1 erstreckt. Eine Gelenkeinrichtung 3 ist mit einem Parallellogrammgelenk 4 gebildet, welches zwischen der Kopplungseinrichtung 2 und einer Trageinrichtung 5 angeordnet ist. An das Parallellogrammgelenk 4 ist die Trageinrichtung 5 im Bereich von zwei Gelenkachsen 6a, 6b gekoppelt.

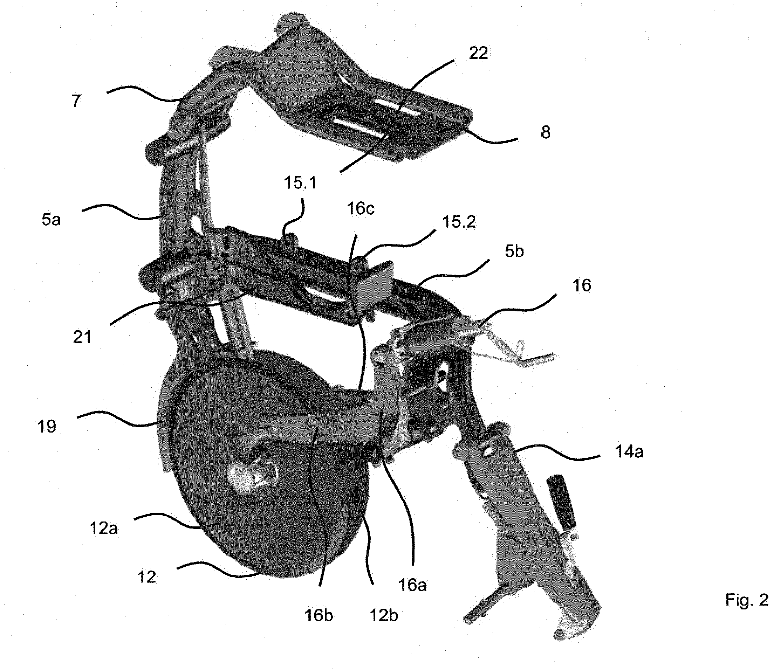

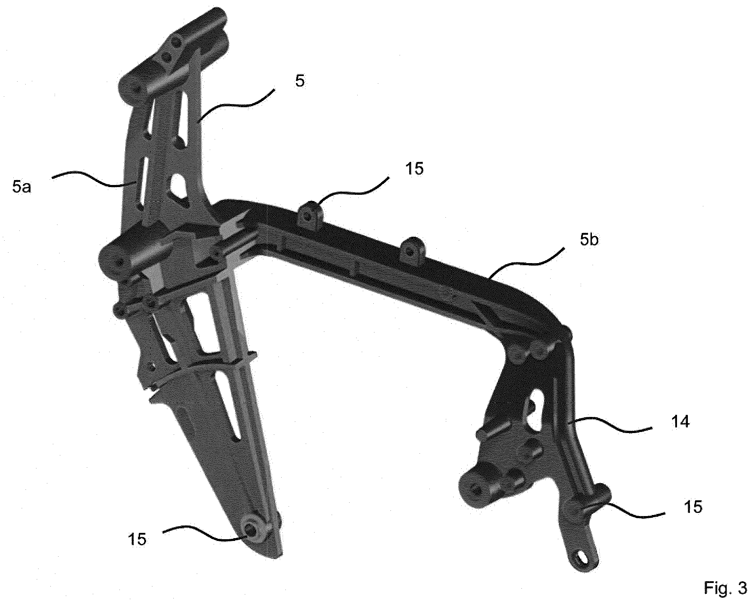

Die Fig. 2 und 3 zeigen perspektivische Darstellungen einer Teilanordnung der Säreihe 1 sowie die Trageinrichtung 5 im Detail.

Bei der Säreihe 1 ist an der Trageinrichtung 5 ein Träger 7 angeordnet, der sich nach oben und hinten erstreckt, derart, dass eine Aufnahme 8 für einen Tank 9 bereitgestellt ist, der der Aufnahme und der Bereitstellung eines Arbeitsguts dient, insbesondere eines Saatguts, eines Düngers und / oder eines Mikrogranulats.

Der Tank 9 steht in Verbindung mit einem Säherz 10, welches bei der dargestellten Ausführungsform in Fig. 1 unterhalb des Tanks 9 angeordnet und an der Trageinrichtung 5 montiert ist. Das Säherz 10 dient der Dosierung des auszubringenden Arbeitsguts, bis hin zur Vereinzelung von Saatkörnern. Ausgestaltungen für das Säherz 10 sind als solche in verschiedenen Ausführungsformen bekannt. Von dem Säherz 10 gelang das dosierte Arbeitsgut zu einer Ausbringeinrichtung (nicht dargestellt), die beispielsweise ein Rohr oder einen Kanal bereitstellt, durch den das Saatgut zum Boden gelangt.

An der Trageinrichtung 5 sind weitere Funktionskomponenten aufgenommen. Hierzu gehören eine Furchenschneideinrichtung 12 mit Schneidscheiben 12a, 12b, die in einer V-Anordnung angeordnet sind, sowie eine Andruckeinrichtung 13 mit Andruckrädern 13a, 13b, wobei die Andruckräder 13b ebenfalls einer V-Anordnung entsprechend angeordnet sind. Bei der gezeigten Ausführungsform sind die Andruckräder 13a, 13b mittels getrennter schwenkbarer Arme 14a, 14b an der Trageinrichtung 5 angeordnet.

Die Trageinrichtung 5 weist einen proximalen Tragarm 5a sowie einen hieran einstückig angeformten distalen Tragarm 5b auf. Bei der gezeigten Ausführungsform ist die Trageinrichtung 5 als einstückiges Gussbauteil ausgeführt, wobei sich im montierten Zustand bei der Säreihe 1 der proximale Tragarm 5a in vertikaler Richtung erstreckt, wohingegen der distale Tragarm 5b sich hiervon nach hinten weg in horizontale Richtung erstreckt. Gemäß den Fig. 2 und 3 weist der distale Tragarm 5b endseitig einen zum Boden hin abgewinkelten Tragarmabschnitt 14 auf, an dem bei dem gezeigten Ausführungsbeispiel die Andruckvorrichtung 13 angeordnet ist.

An der Trageinrichtung 5 sind im Bereich des proximalen und des distalen Tragarms 5a, 5b mehrere getrennt voneinander gebildete Befestigungspunkte 15 angeordnet, die jeweils der Aufnahme eines oder mehrerer der Funktionskomponenten dienen und in Fig. 3 nur zum Teil mit einem Bezugszeichen versehen sind. Dieses gilt auch für eine Sätiefeverstelleinrichtung 16, bei der ein Lenker 16a mit Schwenkarmen 16b, 16c gebildet ist, die sich von dem abgewinkelten Tragarmabschnitt 14 weg in Zug- oder Arbeitsrichtung erstrecken und endseitig weitere Räder 17 aufnehmen. Mittels einer Kurbeleinstelleinrichtung 18 der Sä- oder Saattiefeverstelleinrichtung 16 kann die Stellung der Räder 17 relativ zur Furchenschneideinrichtung 12 eingestellt werden, um so eine Sätiefe einzustellen.

Den Scheiben der Furchenschneideinrichtung 12 vorgelagert ist eine Abdeckung 19.

Gemäß der Darstellung in Fig. 1 ist das Säherz 10 auf einer in der Darstellung einsehbaren Säherzseite freiliegend und unverbaut, insbesondere hinsichtlich von Bauteilen oder Bauteilabschnitten der Trageinrichtung 5. Dieses ermöglicht eine verbesserte Zugänglichkeit des Säherzens 10, sei es für Wartungszwecke und / oder für die Montage oder Demontage an der Trageinrichtung 5, Das Säherz 10 kann nach dem Lösen von Schraubverbindungen in horizontaler Richtung quer zur Arbeitsrichtung von der Trageinrichtung 5 abgenommen werden, da in diese Richtung im Wesentlichen Baufreiheit besteht. Aber auch das Einstellen einer Stelleinrichtung 20 des Säherzens 10 von dieser Seite des Säherzens 10 ist durch die freiliegende, unverbaute Anordnung des Säherzens 10 erleichtert.

Gemäß Fig. 2 ist an dem distalen Tragarm 5b ein Montagebereich 21 für das Säherz 10 mit dem Säherz 10 ausschließlich zugeordneten Befestigungspunkten 15.1, 15.2 gebildet. Auf diese Weise ist das Säherz 10 in einem Montage- oder Bauraum 22 oberhalb der Furchenschneideinrichtung 12 und unterhalb des Tanks 9 montierbar.

Die in der vorstehenden Beschreibung, den Ansprüchen sowie der Zeichnung offenbarten Merkmale können sowohl einzeln als auch in einer Kombination, wie durch die Ansprüche definiert, für die Verwirklichung der verschiedenen Ausführungsformen von Bedeutung sein.

## Patentansprüche

1. Säreihe (1) für eine Sämaschine, mit
- einer Kopplungseinrichtung (2), die eingerichtet ist, an ein Tragelement einer Sämaschine zu koppeln;
- einer Gelenkeinrichtung (3), mit der ein Gelenk zwischen der Kopplungseinrichtung (2) und einer Trageinrichtung (5) bereitgestellt ist, an welcher getrennte Befestigungspunkte für an der Trageinrichtung (5) angeordnete Funktionskomponenten gebildet sind; und
- einem Säherz (10), das eingerichtet ist, ein auszubringendes Arbeitsgut zu dosieren;
wobei die Trageinrichtung (5)
- einen proximalen Tragarm (5a), welcher an die Gelenkeinrichtung (3) koppelt, und
- einen distalen Tragarm (5b) aufweist, der sich auf einer von der Gelenkeinrichtung (3) abgewandten Seite des proximalen Tragarms (5a) von diesem weg erstreckt, der an den proximalen Tragarm (5a) einstückig angeformt ist und an dem das Säherz (10) im Bereich eines Montageabschnitts (21) seitlich angeordnet ist, derart, dass eine Rückseite des Säherzens (10) dem Montageabschnitt (21) des distalen Tragarms (5b) gegenüberliegend und eine Vorderseite des Säherzens (10) von der Trageinrichtung (5) unverbaut angeordnet sind.

2. Säreihe nach Anspruch 1, **dadurch gekennzeichnet, dass** das Säherz (10) mit Blick in Arbeitsrichtung in Bezug auf den proximalen Tragarm (5a) und die Gelenkeinrichtung (3) im Wesentlichen mittig angeordnet ist.

3. Säreihe nach Anspruch 1 oder 2, **dadurch gekennzeichnet, dass** der Montageabschnitt (21) im Bereich einer seitlichen Ausbuchtung des distalen Tragarms (5b) gebildet ist.

4. Säreihe nach mindestens einem der vorangehenden Ansprüche, **dadurch gekennzeichnet, dass** der Montageabschnitt (21) im Bereich eines sich vertikal erstreckenden flächigen Tragarmabschnitts des distalen Tragarms (5b) gebildet ist.

5. Säreihe nach mindestens einem der vorangehenden Ansprüche, **dadurch gekennzeichnet, dass** bei der Trageinrichtung (5) zumindest der proximale Tragarm (5a) und der hieran einstückig angeformte distale Tragarm (5b) an einem Gussbauteil gebildet sind.

6. Säreihe nach mindestens einem der vorangehenden Ansprüche, **gekennzeichnet durch** wenigstens eine Einrichtung aus der folgenden Gruppe:
- eine Furchenschneideinrichtung (12), die an der Trageinrichtung (5) angeordnet und eingerichtet ist, im Betrieb eine Bodenfurche zum Aufnehmen eines auszubringenden Arbeitsguts zu erzeugen;
- einer Andruckeinrichtung (13), die an der Trageinrichtung (5) angeordnet und eingerichtet ist, das im Betrieb ausgebrachte Arbeitsgut in der Bodenfurche anzudrücken;
- eine Ausbringeinrichtung, die an der Trageinrichtung (5) angeordnet und eingerichtet ist, im Betrieb das dosierte Arbeitsgut vom Säherz zu empfangen und in die Bodenfurche und / oder benachbart hierzu auszubringen; und
- einen Tank für das auszubringende Arbeitsgut.

7. Säreihe nach Anspruch 6, **dadurch gekennzeichnet, dass** wobei die Furchenschneideinrichtung (12) und die Andruckeinrichtung (13) an voneinander getrennten Befestigungspunkten an der Trageinrichtung (5) aufgenommen sind.

8. Säreihe nach Anspruch 6 oder 7, **dadurch gekennzeichnet, dass** die Furchenschneideinrichtung (12) an dem proximalen Tragarm (5a) und die Andruckeinrichtung (13) an dem distalen Tragarm (5b) angeordnet sind.

9. Säreihe nach mindestens einem der vorangehenden Ansprüche, soweit auf Anspruch 6 rückbezogen, **dadurch gekennzeichnet, dass** das Säherz (10) in einem Montageraum angeordnet ist, der oberhalb der Furchenschneideinrichtung (12) und unterhalb des Tanks gebildet ist.

10. Säreihe nach mindestens einem der vorangehenden Ansprüche, **dadurch gekennzeichnet, dass** der distale Tragarm (5b) einen endseitigen zum Boden hin abgewinkelten Tragarmabschnitt aufweist.

11. Säreihe nach Anspruch 10, soweit auf Anspruch 6 rückbezogen, **dadurch gekennzeichnet, dass** die Andruckeinrichtung (13) an einem Befestigungspunkt an dem abgewinkelten Tragarmabschnitt angeordnet ist.

12. Säreihe nach Anspruch 9 oder 10, soweit auf Anspruch 6 rückbezogen, **dadurch gekennzeichnet, dass** an dem abgewinkelten Tragarmabschnitt eine mit der Furchenschneideinrichtung (12) zusammenwirkende Sätiefenverstelleinrichtung angeordnet ist.

13. Säreihe nach mindestens einem der vorangehenden Ansprüche, soweit auf Anspruch 6 rückbezogen, **dadurch gekennzeichnet, dass** an dem proximalen Tragarm (5a) eine den Tank tragende Halteeinrichtung angeordnet ist, die sich bis in einen Bereich oberhalb des Säherzens (10) erstreckt.

## Claims

1. A sowing row (1) for a sowing machine, with
- a coupling device (2), which is configured to couple to a support element of a sowing machine;
- a joint device (3), with which a joint is provided between the coupling device (2) and a support device (5), on which separate fastening points for functional components that are arranged on the support device (5) are formed; and
- a sowing heart (10), which is configured to meter a work product to be spread;
wherein the support device (5) has
- a proximal support arm (5a), which couples to the joint device (3), and
- a distal support arm (5b), which, on a side of the proximal support arm (5a) facing away from the joint device (3), extends away from said proximal support arm, which is integrally molded to the proximal support arm (5a) and on which the sowing heart (10) is arranged laterally in the area of an assembly section in such a way that a rear side of the sowing heart (10) is arranged so as to be located opposite to the assembly section (21) of the distal support arm (5b) and a front side of the sowing heart (10) is arranged so as to be unobstructed by the support device (5).

2. The sowing row according to claim 1, **characterized in that** the sowing heart (10) is arranged substantially centrally facing in operating direction with respect to the proximal support arm (5a) and the joint device (3).

3. The sowing row according to claim 1 or 2, **characterized in that** the assembly section (21) is formed in the area of a lateral protrusion of the distal support arm (5b).

4. The sowing row according to at least one of the preceding claims, **characterized in that** the assembly section (21) is formed in the area of a vertically extending flat support arm section of the distal support arm (5b).

5. The sowing row according to at least one of the preceding claims, **characterized in that**, in the support device (5), at least the proximal support arm (5a) and the distal support arm (5b), which is integrally molded thereon, are formed on a cast component.

6. The sowing row according to at least one of the preceding claims, **characterized by** at least one device from the following group:
- a furrow cutting device (12), which is arranged on the support device (5) and which is configured to create a soil furrow for receiving a work product is to be spread during operation;
- a press-on device (13), which is arranged on the support device (5) and which is configured to press the work product spread during operation into the soil furrow;
- a spreading device, which is arranged on the support device (5) and which is configured to receive the metered work product from the sowing heart and to spread it into the soil furrow and/or adjacent thereto during operation; and
- a tank for the work product to be spread.

7. The sowing row according to claim 6, **characterized in that** the furrow cutting device (12) and the press-on device (13) are received on fastening points, which are separated from one another, on the support device (5).

8. The sowing row according to claim 6 or 7, **characterized in that** the furrow cutting device (12) is arranged on the proximal support arm (5a) and the press-on device (13) is arranged on the distal support arm (5b).

9. The sowing row according to at least one of the preceding claims, insofar as dependent on claim 6, **characterized in that** the sowing heart (10) is provided in an installation space, which is provided above the furrow cutting device (12) and below the tank.

10. The sowing row according to at least one of the preceding claims, **characterized in that** the distal support arm (5b) has a support arm section on the end side, which is angled towards the soil.

11. The sowing row according to claim 10, insofar as dependent on claim 6, **characterized in that** the press-on device (13) is arranged on a fastening point on the angled support arm section.

12. The sowing row according to claim 9 or 10, insofar as dependent on claim 6, **characterized in that** a sowing depth adjusting device, which cooperates with the furrow cutting device (12), is provided on the angled support arm section.

13. The sowing row according to at least one of the preceding claims, insofar as dependent on claim 6, **characterized in that** a holding device, which supports the tank and which extends into an area above the sowing heart (10), is provided on the proximal support arm (5a).

## Revendications

1. Ligne de semis (1) pour un semoir, avec
- un dispositif d'accouplement (2) étudié pour l'accouplement avec un élément de support d'un semoir ;
- un dispositif d'articulation (3) avec lequel une articulation est mise à disposition entre le dispositif d'accouplement (2) et un dispositif de support (5) au niveau duquel sont formés des points de fixation séparés pour des composants fonctionnels agencés sur le dispositif de support (5) ; et
- un cœur de semis (10) étudié pour doser un matériau de travail à distribuer ; dans lequel le dispositif de support (5)
- présente un bras de support proximal (5a), lequel est couplé avec le dispositif d'articulation (3), et
- un bras de support distal (5b), lequel s'étend sur un côté, tournant le dos au dispositif d'articulation (3), du bras de support proximal (5a) en éloignement de celui-ci, lequel est formé d'une seule pièce sur le bras de support proximal (5a) et au niveau duquel le cœur de semis (10) est agencé latéralement dans la zone d'une partie de montage (21) de manière à ce qu'une face arrière du cœur de semis (10) est disposée en vis-à-vis de la partie de montage (21) du bras de support distal (5b) et qu'une face avant du cœur de semis (10) est agencée de manière non entravée par le dispositif de support (5).

2. Ligne de semis selon la revendication 1, **caractérisée en ce que** le cœur de semis (10) est agencé, en vue en direction de travail, par rapport au bras de support proximal (5a) et le dispositif d'articulation (3) est agencé sensiblement centralement.

3. Ligne de semis selon la revendication 1 ou 2, **caractérisée en ce que** la partie de montage (21) est formée dans la zone d'une courbure latérale du bras de support distal (5b).

4. Ligne de semis selon l'une au moins des revendications précédentes, **caractérisée en ce que** la partie de montage (21) est formée dans la zone d'une partie de bras de support plane s'étendant verticalement du bras de support distal (5b).

5. Ligne de semis selon l'une au moins des revendications précédentes, **caractérisée en ce qu'**au niveau du dispositif de support (5), au moins le bras de support proximal (5a) et le bras de support distal (5b) formé d'une seule pièce sur celui-ci sont formés sur une pièce coulée.

6. Ligne de semis selon l'une au moins des revendications précédentes, **caractérisée par** au moins un dispositif du groupe suivant :
- un dispositif de traçage de sillons (12) agencé sur le dispositif de support (5) et étudié pour générer, lors du fonctionnement, un sillon de terre pour recevoir un matériau de travail à distribuer ;
- un dispositif presseur (13) agencé sur le dispositif de support (5) et étudié pour presser le matériau de travail distribué lors du fonctionnement dans le sillon de terre ;
- un dispositif de distribution agencé sur le dispositif de support (5) et étudié, lors du fonctionnement, pour réceptionner le matériau de travail dosé du cœur de semis et le distribuer dans le sillon de terre et/ou au voisinage de celui-ci ; et
- un réservoir pour le matériau de travail à distribuer.

7. Ligne de semis selon la revendication 6, **caractérisée en ce que** le dispositif de traçage de sillons (12) et le dispositif presseur (13) sont réceptionnés au niveau de points de fixation séparés sur le dispositif de support (5).

8. Ligne de semis selon la revendication 6 ou 7, **caractérisée en ce que** le dispositif de traçage de sillons (12) est agencé sur le bras de support proximal (5a) et le dispositif presseur (13) est agencé sur le bras de support distal (5b).

9. Ligne de semis selon l'une au moins des revendications précédentes, lorsque dépendant de la revendication 6, **caractérisée en ce que** le cœur de semis (10) est agencé dans un espace de montage formé au-dessus du dispositif de traçage de sillons (12) et en-dessous du réservoir.

10. Ligne de semis selon l'une au moins des revendications précédentes, **caractérisée en ce que** le bras de support distal (5b) présente une partie de bras de support coudée vers le sol du côté d'extrémité.

11. Ligne de semis selon la revendication 10, lorsque dépendant de la revendication 6, **caractérisée en ce que** le dispositif presseur (13) est agencé au niveau d'un point de fixation sur la partie de bras de support coudée.

12. Ligne de semis selon la revendication 9 ou 10, lorsque dépendant de la revendication 6, **caractérisée en ce qu'**au niveau de la partie de bras de support coudée, un dispositif de réglage de profondeur de semis coopérant avec le dispositif de traçage de sillons (12) est disposé.

13. Ligne de semis selon l'une au moins des revendications précédentes, lorsque dépendant de la revendication 6, **caractérisée en ce qu'**au niveau du bras de support proximal (5a), un dispositif de maintien portant le réservoir est disposé, lequel s'étend jusque dans une zone au-dessus du cœur de semis (10).
